# FASCICULE DE BREVET EUROPEEN

(11) **EP 1 850 017 B1**
(45) Date de publication et mention de la délivrance du brevet: **14.07.2010**
(21) Numéro de dépôt: 07300949.0
(22) Date de dépôt: 13.04.2007
(51) Int. Cl.: F16C 11/06, B60T 11/18

(54) **Liason autobloquante entre une pièce plane et une tige à extrémité sphérique**
Selbstsperrende Verbindung zwischen einem Flachteil und einer Stange mit kugelförmigem Ende
Self-locking link between a flat piece and a rod with a spherical end

(30) Priorité: 21.04.2006 WO PCT/FR2006/051400
(43) Date de publication de la demande: 31.10.2007
(73) Titulaire: PEUGEOT CITROËN AUTOMOBILES S.A., 78140 Vélizy Villacoublay (FR)
(72) Inventeur: Meyer, Bruno, 25420 COURCELLES-LES-MONTBELIARD (FR)

(56) Documents cités:
- EP-A- 1 440 858
- WO-A-2005/033574
- DE-A1- 10 214 695
- US-A- 4 693 628

## Description

L'invention concerne une liaison autobloquante entre une tige à extrémité sphérique et une pièce plane, telles qu'une tige de commande d'amplificateur de frein et une pédale de frein d'un véhicule automobile, qui comprend généralement un bras de pédale sous forme d'une pièce plane.

Dans le cas d'une commande de freinage de véhicule automobile, la tige de commande actionne un piston d'amplificateur de frein, lorsqu'un effort est appliqué par la pédale à cette tige pour la déplacer longitudinalement vers l'avant du véhicule.

Le montage d'une telle commande est effectué par un opérateur qui positionne et fixe d'abord un pédalier auquel la pédale de frein est préalablement fixée, à une partie correspondante du véhicule appelée tablier.

Après avoir fixé le pédalier au tablier, l'opérateur accouple la pédale de frein à l'extrémité sphérique de la tige de commande, pour lier en mouvement cette tige à la pédale. Cette tige de commande est par exemple montée préalablement au pédalier, et elle dépasse du tablier vers l'intérieur du véhicule.

Un exemple de liaison autobloquante est notamment connu du document EP-A-1 440 858.

Le but de l'invention est de proposer une liaison à faible jeu qui soit simple à accoupler tout en présentant une sûreté de fonctionnement optimale.

A cet effet, l'invention a pour objet un dispositif conforme à l'objet de la revendication 1.

L'invention concerne également un dispositif tel que défini ci-dessus, dans lequel l'agrafe comprend des griffes de maintien du coussinet, ces griffes autorisant un mouvement de translation du coussinet par rapport à l'agrafe.

L'invention concerne également un dispositif tel que défini ci-dessus, comprenant au moins quatre ergots et au moins quatre lames flexibles.

L'invention sera maintenant décrite plus en détail et en référence aux dessins annexés.
La figure 1 est une vue en perspective de la liaison selon l'invention désassemblée ;
La figure 2 est une vue en perspective de la liaison selon l'invention assemblée ;
La figure 3 est une vue latérale de la liaison selon l'invention assemblée ;
La figure 4 est une vue de dessus de la liaison selon l'invention assemblée ;
La figure 5 est une vue en perspective de l'agrafe de la liaison selon l'invention ;
La figure 6 est une vue de dessus en coupe de la liaison selon l'invention ;
La figure 7 est une vue latérale en coupe selon un plan médian de la liaison selon l'invention ;
La figure 8 est une vue latérale en coupe selon un plan décalé de la liaison selon l'invention ;
La figure 9 est une vue en perspective d'un second mode de réalisation de l'agrafe de la liaison selon l'invention ;
La figure 10 est une vue en perspective d'un troisième mode de réalisation de l'agrafe de la liaison selon l'invention.

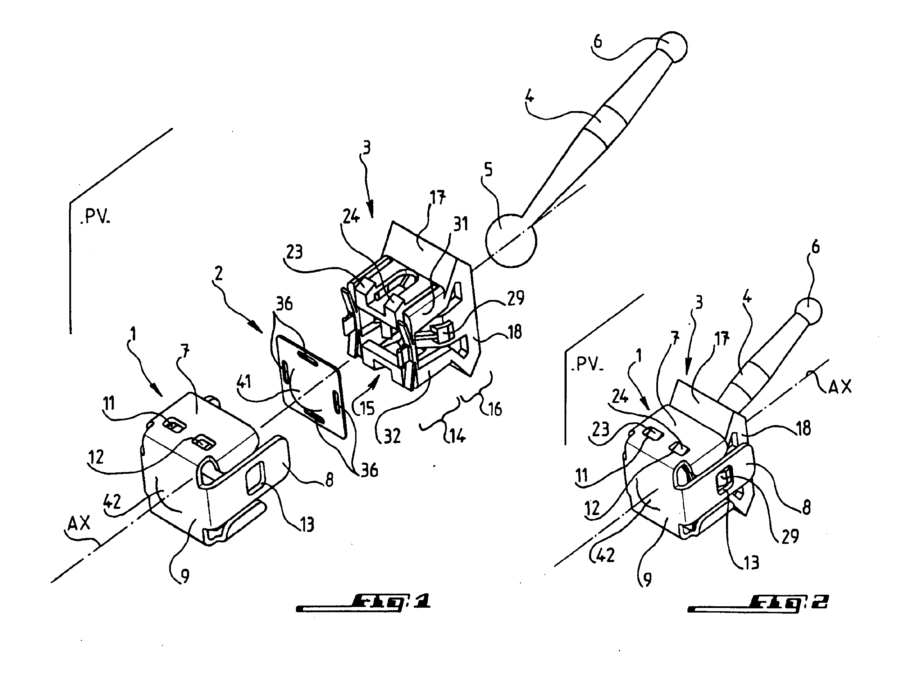

Dans la figure 1, une liaison selon l'invention, représentée en éclaté, comprend une cage 1, un coussinet 2, une agrafe 3 et une tige de commande 4 ; ces éléments étant disposés le long d'un axe longitudinal AX en étant espacés les uns des autres le long de cet axe.

La cage 1 qui est réalisée en tôle pliée est destinée à être rigidement fixée à une pédale de frein non représentée, par soudage, sertissage ou autre. L'agrafe 3 est destinée à être encliquetée dans cette cage 1 grâce à différents systèmes de blocage détaillés plus bas. Lorsque la liaison selon l'invention est montée, le coussinet 2 est bloqué entre le fond de cette cage 1 et l'agrafe 3.

La tige de commande 4 comprend une extrémité sphérique 5 destinée à être engagée dans la cage 1 pour être emprisonnée dans celle-ci, de façon à solidariser la tige de commande 4 à la cage 1 qui est elle-même rigidement fixée à la pédale de frein. Lorsque la liaison est assemblée, elle a l'allure générale visible dans la figure 2.

La tige de commande 4 comprend également une autre extrémité sphérique 6 par laquelle elle est reliée à un amplificateur de frein non représenté. La tige de commande 4 est libre de pivoter autour de l'autre extrémité sphérique 6 en pouvant se déplacer dans un plan vertical longitudinal du véhicule repéré par PV dans la figure 1.

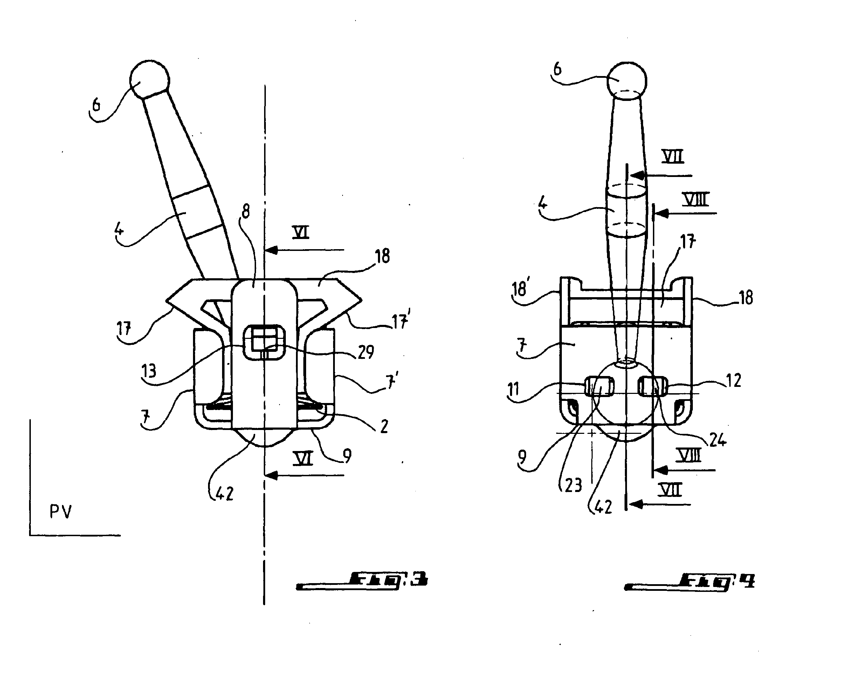

Comme visible dans la figure 3, la tige de commande 4 est aussi libre de se déplacer en rotation dans le plan PV lorsque l'extrémité sphérique 5 est emprisonnée dans la cage 1.

La cage 1 et l'extrémité sphérique 5 constituent une liaison rotule permettant à la tige 4 de pivoter également dans un plan normal au plan PV. La tige de commande peut ainsi s'incliner dans le plan de la figure 4 de façon à s'incliner par rapport à la position qu'elle occupe dans cette figure 4.

La cage 1 a une forme généralement parallélépipédique, délimitée par un flanc supérieur 7, un premier flanc latéral 8 et un fond 9, ainsi qu'un flanc inférieur et un second flanc latéral non visibles sur les figures 1 et 2.

Cette cage admet l'axe longitudinal AX comme axe de symétrie, de sorte que le flanc inférieur est symétrique du flanc supérieur par rapport à cet axe, et que les flancs latéraux sont symétriques l'un de l'autre par rapport à l'axe longitudinal AX.

Chaque élément de la cage qui est repéré par un signe de référence, a son symétrique par rapport à l'axe AX qui est repéré dans les figures par le même signe de référence complété par le signe prime.

Le flanc supérieur 7 est formé par une portion rectangulaire de tôle repliée à angle droit par rapport au fond 9. De manière analogue, le premier flanc latéral 8 est formé par une première patte latérale repliée à angle droit par rapport au fond 9.

La cage 1 est obtenue par pliage d'une tôle découpée ayant un contour en forme de croix, le centre de cette croix correspondant au fond 9. Les branches de cette croix correspondent respectivement au flanc supérieur, au flanc inférieur, à la première patte latérale 8 et à la seconde patte latérale.

Comme visible dans les figures 1 et 2, le flanc supérieur 7 comprend deux lumières 11 et 12 destinées à recevoir des éléments de blocage correspondants de l'agrafe 3, et la première patte latérale 8 comprend une lumière latérale 13 destinée à recevoir un élément de blocage complémentaire de l'agrafe.

Les lumières 11, 12 et 13 sont obtenues par découpe de la tôle dans laquelle est fabriquée la cage 1, chaque découpe ayant un contour d'allure générale carrée.

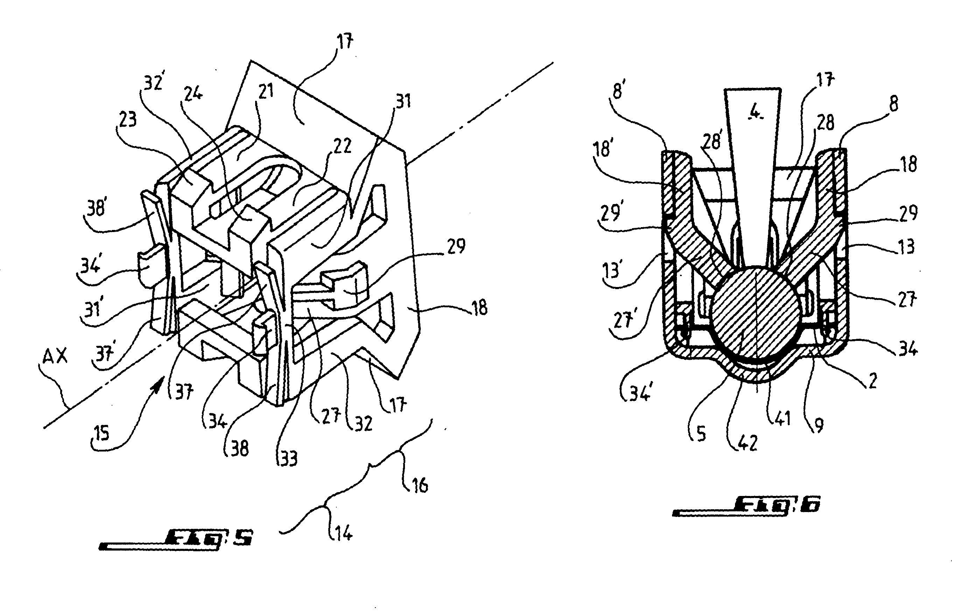

Il en va de même du flanc inférieur et de la seconde patte latérale qui ne sont pas visibles sur les figures 1 et 2, mais qui apparaissent notamment dans les vues en coupe des figures 6 à 8, en étant repérés respectivement par 7' et par 8'.

Cette cage 1 coopère avec l'agrafe 3 en matière plastique, qui comprend une partie dite interne 14 qui est destinée à s'engager dans la cage 1, et une partie dite externe 16 qui dépasse de la cage 1 lorsque l'agrafe 3 est montée dans cette cage 1. La partie interne 14 se termine par une face d'extrémité 15 normale à l'axe AX, et qui est située en vis-à-vis du fond 9 de la cage 1 lorsque l'agrafe est encliquetée. L'ensemble de la partie interne 14 prolonge la partie externe 16 le long de l'axe AX.

Cette agrafe 3 qui est représentée seule et en perspective dans la figure 5 admet également l'axe longitudinal AX comme axe de symétrie. Chaque élément de l'agrafe 3 qui est repéré par un signe de référence, a son symétrique par rapport à l'axe AX qui est repéré dans les figures par le même signe de référence complété par le signe prime.

La partie externe 16 de l'agrafe a la forme générale d'un cadre carré ayant deux bords opposés inclinés de façon convergente. La partie interne 14 est constituée par différents éléments qui prolongent la partie externe 16.

Les côtés opposés inclinés constituent un flanc de guidage supérieur 17 et un flanc de guidage inférieur 17' qui sont reliés par deux parois latérales 18 parallèles l'une à l'autre pour former le cadre. Les deux flancs de guidage 17 et 17' ont chacun une forme générale de plaque rectangulaire inclinée par rapport à l'axe longitudinal AX pour délimiter conjointement un engorgeoir.

Ces flancs de guidage 17 et 17' dirigent l'extrémité sphérique 5 vers l'intérieur de la partie interne 14, en plaçant son centre sur l'axe AX, lorsque cette extrémité 5 est engagée dans l'agrafe 3. Ces flancs de guidage 17 et 17' sont symétriques l'un de l'autre par rapport à l'axe AX, de même que les parois latérales 18 et 18'.

Lorsque l'agrafe 3 est encliquetée dans la cage 1, les flancs de guidage supérieur et inférieur, 17 et 17' sont situés sensiblement dans le prolongement des flancs supérieur 7 et inférieur 7' de la cage 1. Dans ce cas, les parois latérales 18 et 18' sont situées dans le prolongement des pattes latérales 8 et 8' de la cage.

La partie interne 14 de l'agrafe est formée de différents éléments qui partent de la partie externe 16 ou embase tout en étant inscrits dans une enveloppe sensiblement parallélépipédique.

Le flanc de guidage supérieur 17 est prolongé par deux pattes 21, 22 de blocage de l'agrafe 3 dans la cage 1. Ces deux pattes ont chacune une extrémité pourvue d'un ergot, repérés respectivement par 23 et 24, et orientés vers l'extérieur, c'est-à-dire selon une direction s'éloignant de l'axe longitudinal AX.

Ces pattes 21 et 22 s'étendent toutes deux parallèlement à l'axe AX, pour longer une face interne du flanc supérieur 7 de la cage 1 lorsque l'agrafe est encliquetée. La partie interne comprend également deux autres pattes, 21' et 22', symétriques des pattes 21 et 22 par rapport à l'axe longitudinal AX.

Lorsque l'agrafe 3 est montée dans la cage 1, les ergots 23 et 24 s'engagent dans les lumières correspondantes 11 et 12 du flanc supérieur 7. Ces quatre pattes, avec leurs ergots assurent ainsi le blocage de l'agrafe 3 dans la cage 1 longitudinalement, c'est-à-dire le long de l'axe AX.

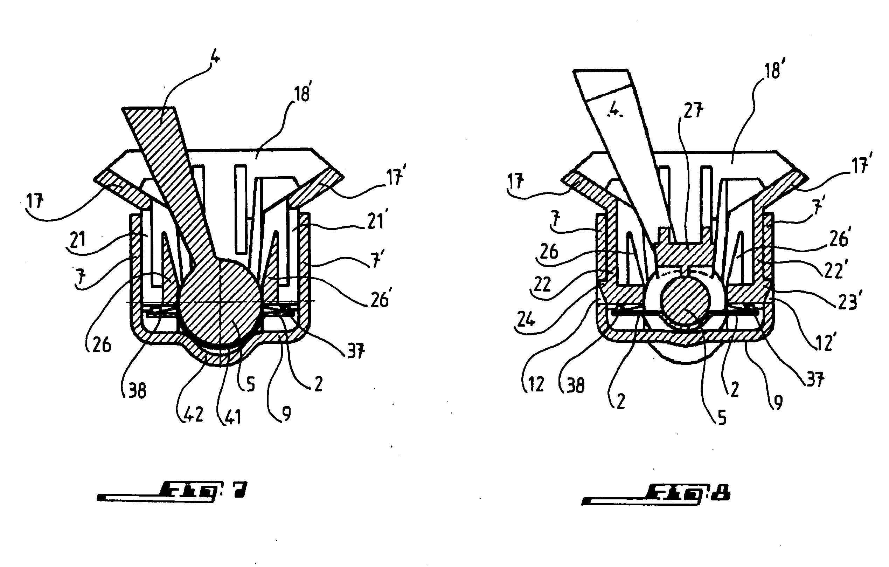

Les pattes 21 et 22 ont leurs extrémités réunies pour porter un patin 26 qui s'étend entre ces pattes et l'axe de symétrie AX. Comme visible dans la figure 7, ce patin 26 présente une face interne sensiblement plane qui est inclinée par rapport à l'axe AX selon la même orientation que le flanc de guidage 17, mais d'un angle légèrement plus faible.

Ce patin 26 maintient les ergots 23 et 24 emboîtés dans les lumières correspondantes 11 et 12 de la cage 1 lorsque l'extrémité sphérique 5 est emprisonnée dans l'agrafe. Lors de l'engagement de l'extrémité sphérique 5 dans la cage 1, celle-ci vient en appui contre la face interne inclinée du patin 26, ce qui a pour effet de le repousser vers l'extérieur, au fur et à mesure que l'extrémité sphérique 5 est rapprochée du fond 9.

Ceci a pour effet d'éloigner les ergots 23 et 24 de l'axe AX pour qu'ils s'emboîtent dans les lumières 11 et 12 afin de garantir un blocage complet de l'agrafe 3 dans la cage 1. Les autres pattes, 21' et 22' sont elles aussi réunies par un autre patin 26' symétrique du patin 26 par rapport à l'axe AX et ayant la même fonction.

Chaque paroi latérale telle que la paroi latérale 18 porte un volet 27 de blocage de l'extrémité sphérique 5 dans l'agrafe. Le volet 27 a une forme générale de patte à contour sensiblement rectangulaire qui prolonge un bord de la paroi latérale 18 en étant incurvé en direction de l'axe AX.

Lorsque l'extrémité sphérique 5 est introduite dans l'agrafe 3, elle écarte les volets de blocage 27 et 27' en les éloignant de l'axe AX, au fur et à mesure qu'elle est rapprochée du fond 9 de la cage 1. Après passage de l'extrémité sphérique, ces volets se rétractent pour retrouver leur position initiale, ce qui correspond à la situation de la figure 6.

Dans cette situation, les volets 27 et 27' ont alors chacun une extrémité, 28, 28' en appui sur l'extrémité sphérique 5 pour la maintenir emprisonnée en appui contre le fond 9 et/ou le coussinet 2.

Le volet 27 comprend sur sa face externe un ergot complémentaire 29 apte à s'engager dans la lumière latérale 13 qui est réalisée dans la patte 8 de la cage 1. L'ergot complémentaire 29 et la lumière latérale 13 assurent une transmission directe des efforts depuis l'extrémité sphérique 5 vers la cage 1 en cas de sollicitation tendant à désolidariser la liaison selon l'invention.

Le volet 27' est lui aussi pourvu d'un autre ergot complémentaire 29' s'engageant dans une autre lumière latérale 13' correspondante.

La partie interne 14 de l'agrafe 3 qui est inscrite dans une enveloppe parallélépipédique comprend encore quatre montants, 31, 32, 31' et 32', situés au niveau de quatre des arêtes de ce parallélépipède qui sont parallèles à l'axe longitudinal AX. Chaque montant prolonge, dans la direction AX, la jonction d'un flanc de guidage 17, 17' avec une paroi latérale 18, 18'.

Les montants 31 et 32 sont situés de part et d'autre du volet 27, et de manière analogue, les montants 31' et 32' sont situés de part et d'autre du volet 27'. Les montants 31 et 32' sont situés de part et d'autre des pattes 21 et 22. Les montants 31' et 32 sont situés de part et d'autre des pattes 21' et 22'.

Les montants 31 et 32 ont leurs extrémités réunies par un bras 33 perpendiculaire à ces montants qui coïncide avec la face d'extrémité 15. Ce bras porte une griffe 34 destinée au montage du coussinet 2 sur l'agrafe 3, s'étendant longitudinalement depuis le centre du bras 33, dans une direction qui s'éloigne de la partie externe 16. Comme visible dans la figure 1, le coussinet 2 comprend des fentes complémentaires 36.

Avant engagement de l'agrafe 3 dans la cage 1, le coussinet 2 est monté sur cette agrafe 3 par engagement des deux griffes 34 et 34' dans deux fentes correspondantes 36. Les griffes 34 et 34' ont chacune une extrémité crochue pour retenir le coussinet 2, tout en lui permettant de coulisser longitudinalement sur une certaine distance légèrement inférieure à la longueur totale des griffes 34 et 34' le long de l'axe AX.

Le bras 33 comprend encore deux languettes flexibles 37 et 38 qui partent chacune du centre du bras 33, c'est-à-dire de la base de la griffe 34, et qui forment un angle avec ce bras. Chaque languette flexible 37, 38 comprend ainsi une extrémité libre légèrement espacée du bras 33 selon la direction longitudinale, les deux languettes formant un V ouvert lorsqu'elles sont vues de côté.

De manière analogue, le bras 33' qui réunit les montants 31' et 32' comprend lui aussi une griffe et deux languettes flexibles symétriques de celles du bras 33, par rapport à l'axe AX.

Chaque languette flexible a une longueur légèrement inférieure à la demi-longueur du bras qui la porte. Lorsque le coussinet 2 est engagé sur les griffes 34, 34', les extrémités des languettes flexibles inclinées sont en appui sur la face du coussinet 2 orientée vers l'agrafe 3.

Dans cette situation, les languettes exercent un effort, qui tend à écarter l'agrafe 3 du fond 9 tout en maintenant le coussinet plaqué contre le fond 9 de la cage 1. En d'autres termes, les languettes flexibles tendent à écarter l'agrafe de la cage pour assurer un encliquetage sans jeu en maintenant les ergots 23, 24, 23', 24' en appui sur les bords des lumières qui sont opposés à la face d'extrémité 15.

Grâce à ces languettes, l'agrafe peut être dimensionnée pour disposer d'une course supplémentaire (ou surcourse) d'engagement dans la cage afin d'assurer que les ergots 23, 24, 23', 24' s'emboîtent correctement dans leurs lumières correspondantes lors du montage.

L'encliquetage de l'agrafe consiste ainsi à l'engager dans la cage en exerçant une pression pour la placer au-delà de sa position finale, ce qui a pour effet de comprimer les languettes flexibles et de permettre la sortie des ergots 23, 24, 23', 24', c'est-à-dire leur engagement dans leurs lumières correspondantes.

Lorsque la pression est relâchée, les languettes flexibles tendent à écarter légèrement l'agrafe de la cage, ce qui a pour effet de caler chaque ergot contre le bord correspondant de la lumière à contour carré dans laquelle il est engagé, ce bord étant le bord opposé au fond 9, le long de l'axe AX.

Sans cette surcourse, des dispersions de fabrication de la longueur de l'agrafe et de celle de la cage pourraient conduire à des situations dans lesquelles, la cage étant trop longue et/ou l'agrafe trop courte, il serait impossible d'emboîter les ergots dans leurs lumières.

Comme visible dans la figure 7, le coussinet 2 comprend une partie centrale hémisphérique 41, obtenue par emboutissage ou autre, qui vient en appui contre une partie hémisphérique complémentaire 42, de plus faible diamètre, qui est réalisée dans le fond 9.

La longueur de la partie interne 14 le long de l'axe AX est légèrement inférieure à la longueur de la cage 1 le long de l'axe AX, cette différence correspondant sensiblement à l'épaisseur de la partie hémisphérique 41 du coussinet 2, le long de l'axe AX.

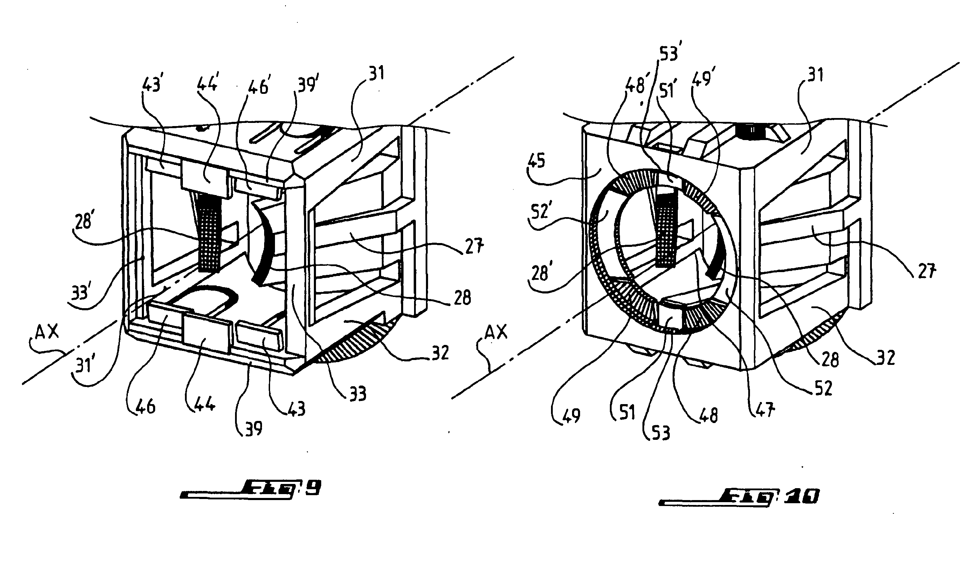

Dans l'exemple des figures 1 à 8, le coussinet est solidarisé à l'agrafe en étant maintenu par les griffes 34 et 34' de cette agrafe. D'autres montages peuvent être envisagés, comme dans les exemples des figures 9 et 10 qui montrent deux autres modes de réalisation de l'agrafe qui sont également des agrafes symétriques par rapport à l'axe longitudinal AX.

Dans l'exemple de la figure 9, les montants 31' et 32 sont réunis par un bras 39 portant deux languettes flexibles 43 et 46 orientées radialement vers l'axe AX tout en étant inclinées, et une dent 44. Les languettes flexibles 43 et 46 ainsi que la dent 44 se présentent sous forme de plaques rectangulaires, disposées en quinconces lorsque vues de côté.

Le montage du coussinet sur l'agrafe consiste simplement à l'emboîter dans l'agrafe de telle façon que deux de ses bords opposés soient calés entre les languettes flexibles et les dents en quinconces.

Les languettes flexibles 43, 46, 43', 46' sont inclinées de façon à s'éloigner de la partie externe 16 de l'agrafe 3. Lorsque cette agrafe est montée avec le coussinet qu'elle porte dans la cage 1, les languettes flexibles exercent des efforts tendant à éloigner l'agrafe du fond de la cage en plaquent le coussinet contre le fond de cage, pour assurer un encliquetage sans jeu.

Dans un autre mode de réalisation représenté en figure 10, l'agrafe comprend une face 45 formant un fond réunissant les quatre montants 31, 32, 31' et 32', et ayant une ouverture centrale 47 pourvue de languettes flexibles et dans laquelle est monté le coussinet. Les languettes flexibles 48, 49, 48' et 49' sont montées sur le pourtour interne, en alternance avec des butées 51, 52, 51', 52'.

Comme dans l'exemple de la figure 9, les languettes flexibles sont orientées radialement vers l'axe AX, tout en étant légèrement inclinées de façon à s'éloigner de la partie externe 16 de l'agrafe.

Le coussinet qui est utilisé a ici un contour circulaire. Son montage sur l'agrafe consiste à l'engager dans l'ouverture 47 qui présente une épaisseur suffisante pour permettre d'engager dans celle-ci le coussinet tout en le plaçant en appui sur les différentes languettes flexibles.

A cet effet, l'ouverture 47 est également pourvue de deux dents 53, 53', symétriques l'une de l'autre par rapport à l'axe longitudinal AX, et assurant le maintien du coussinet en position dans l'ouverture.

Lorsque l'agrafe avec le coussinet sont montés dans la cage, les languettes flexibles 48, 49, 48' et 49' exercent des efforts tendant à éloigner l'agrafe du fond de la cage en plaquant le coussinet contre le fond de cage, pour assurer un encliquetage sans jeu

Dans les différents modes de réalisation présentés ci-dessus, le montage de la liaison autobloquante selon l'invention est réalisé de la manière suivante.

La cage est fixée à la pédale de frein, par soudage, sertissage ou autre. Le coussinet est monté sur l'agrafe en matière plastique, cette agrafe étant ensuite emboîtée dans la cage.

La présence des languettes flexibles autorise une surcourse longitudinale de la partie interne de l'agrafe dans la cage. Cette surcourse permet d'enfoncer profondément la partie interne de l'agrafe dans la cage pour assurer que les ergots de blocage de l'agrafe s'emboîtent dans les lumières complémentaires de la cage.

Durant cet emboîtement, les languettes flexibles qui permettent cette surcourse sont comprimées. Lorsque la pression est relâchée, l'effort exercé par les languettes flexibles tend à éloigner l'agrafe du coussinet, et donc du fond de la cage. En d'autres termes, ces languettes flexibles assurent que les ergots sont maintenus en appui contre les bords correspondants des lumières qui les reçoivent. Ainsi, ces languettes flexibles assurent un montage sans jeu de l'agrafe dans la cage, et ce, sans autre opération que la simple insertion de l'agrafe dans la cage.

Le pédalier portant la pédale de frein est ensuite monté et fixé par un opérateur sur le tablier du véhicule. Lorsque ce montage est effectué, l'opérateur enfonce la pédale de frein pour accoupler la liaison.

Sur enfoncement de la pédale, l'agrafe reçoit l'extrémité sphérique de la tige de commande, qui est d'abord guidée par les flancs de guidage vers l'intérieur de cette agrafe. La tête sphérique progresse ensuite dans l'agrafe pour se rapprocher du fond. Durant cette progression, elle écarte les volets de blocage, et les patins liés aux pattes de blocage de l'agrafe pour assurer un engagement complet des ergots de blocage de l'agrafe dans les lumières correspondantes de la cage.

Lorsque l'extrémité sphérique a passé les volets en les écartant, ceux-ci se rétractent pour bloquer cette extrémité sphérique en appui contre le coussinet. Dans cette situation, l'extrémité sphérique reste au contact des patins qu'elle maintien écartés l'un de l'autre pour assurer que les ergots de blocage sont engagés dans les lumières correspondantes, tout au long de la vie de la liaison.

Avantageusement, les volets sont réalisés en plastique lubrifié pour assurer un maintien de la sphère en appui contre le coussinet, malgré les dispersions dimensionnelles de fabrication. Par exemple, les extrémités de ces volets peuvent être prévues biseautées, de façon à absorber une éventuelle dispersion dimensionnelle. Ceci permet d'assurer que l'ensemble de la liaison autobloquante n'a aucun jeu une fois qu'elle est montée.

L'invention offre notamment les avantages suivants :
Elle assure un encliquetage sans jeu de l'agrafe. Ainsi, dans le cas où la pédale est tirée, ou bien remonte violemment, la liaison ne risque pas de claquer.

L'encliquetage de l'agrafe est amélioré par la présence d'au moins quatre ergots indépendants maintenus emboîtés par la présence de l'extrémité sphérique dans l'agrafe.

Cet encliquetage est encore amélioré par la présence de deux ergots supplémentaires portés par les volets.

Lors de l'appui sur la pédale de frein, le coussinet étant déjà plaqué contre le fond de la cage, il n'y a pas de jeu à rattraper, de sorte que la liaison a un comportement ergonomique.

## Revendications

1. Dispositif de liaison autobloquante entre une tige à extrémité sphérique (5) et une pièce plane, telles qu'une tige (4) de commande d'amplificateur de frein et une pédale de frein de véhicule automobile, ce dispositif comprenant une cage (1) apte à être fixée rigidement à la pièce plane, une agrafe (3) encliquetée dans cette cage (1) et apte à emprisonner l'extrémité sphérique (5), cette agrafe (3) comprenant des ergots (23, 24) s'engageant dans des lumières (11, 12) de la cage (1), et des moyens élastiques (37, 38, 37', 38') tendant à éloigner l'agrafe (3) de la cage (1) pour assurer un emboîtement sans jeu par maintien des ergots (23, 24) en appui sur des bords correspondants des lumières (11, 12) dans lesquelles ils sont engagés, dans lequel la cage (1) comprend un fond (9) et des flancs (7) perpendiculaires à ce fond (9) dans lesquels sont réalisées les lumières (11, 12) recevant les ergots (23, 24), et dans lequel les moyens élastiques (37, 38, 37', 38') de l'agrafe sont portés par une face d'extrémité (15) de l'agrafe (3) qui est située en vis-à-vis du fond (9) de la cage, et dans lequel les moyens élastiques (37, 38, 37', 38') sont des languettes flexibles orientées de façon oblique par rapport à la face d'extrémité (15),**caractérisé en ce qu'**il comprend un coussinet (2) interposé entre le fond (9) et l'agrafe (3), et dans lequel les moyens élastiques exercent une pression sur ce coussinet (2) pour tendre à éloigner l'agrafe (3) de la cage (1).

2. Dispositif selon la revendication 1, dans lequel l'agrafe comprend des griffes (34, 34') de maintien du coussinet (2), ces griffes autorisant un mouvement de translation du coussinet (2) par rapport à l'agrafe (3).

3. Dispositif selon la revendication 1, comprenant au moins quatre ergots (23, 24) et au moins quatre lames flexibles (38, 37, 38', 37').

## Claims

1. Self-locking link device between a rod with a spherical end (5) and a flat piece, such as a brake booster control rod (4) and a motor vehicle brake pedal, this device comprising a cage (1) able to be secured rigidly to the flat piece, a clip (3) snap-fastened into this cage (1) and able to enclose the spherical end (5), this clip (3) comprising lugs (23, 24) engaging in slots (11, 12) in the cage (1) and elastic means (37, 38, 37', 38') tending to move the clip (3) away from the cage (1) in order to ensure clearance-free interlocking by keeping the lugs (23, 24) pressed against the corresponding edges of the slots (11, 12) in which they are engaged, wherein the cage (1) has an end wall (9) and side walls (7), perpendicular to this end wall (9), in which the slots (11, 12) receiving the lugs (23, 24) are made, and wherein the elastic means (37, 38, 37', 38') of the clip are held by an end face (15) of the clip (3), this end face being located facing the end wall (9) of the cage, and wherein the elastic means (37, 38, 37', 38') are flexible tongues oriented obliquely with respect to the end face (15), said device being **characterized in that** it comprises a bearing plate (2) interposed between the end wall (9) and the clip (3), and wherein the elastic means exert a pressure on this bearing plate (2) in order to tend to move the clip (3) away from the cage (1).

2. Device according to Claim 1, wherein the clip comprises claws (34, 34') for holding the bearing plate (2), these claws enabling the bearing plate (2) to move translationally with respect to the clip (3).

3. Device according to Claim 1, comprising at least four lugs (23, 24) and at least four flexible leaves (38, 37, 38', 37').

## Patentansprüche

1. Vorrichtung zur selbstsperrenden Verbindung zwischen einer Stange mit kugelförmigem Ende (5) und einem flachen Bauteil, wie einer Bremsverstärker-Steuerstange (4) und einem Kraftfahrzeug-Bremspedal, wobei diese Vorrichtung ein Gehäuse (1), das starr am flachen Bauteil befestigt werden kann, und eine Klammer (3) enthält, die in dieses Gehäuse (1) eingerastet ist und das kugelförmige Ende (5) umschließen kann, wobei diese Klammer (3) Zapfen (23, 24), die sich in Langlöcher (11, 12) des Gehäuses (1) einfügen, und elastische Einrichtungen (37, 38, 37', 38') enthält, die danach streben, die Klammer (3) vom Gehäuse (1) zu entfernen, um ein spielfreies Ineinanderfügen durch Halt der Zapfen (23, 24) in Auflage auf entsprechenden Rändern der Langlöcher (11, 12) zu gewährleisten, in die sie eingefügt sind, wobei das Gehäuse (1) einen Boden (9) und Flanken (7) lotrecht zu diesem Boden (9) aufweist, in denen die die Zapfen (23, 24) aufnehmenden Langlöcher (11, 12) ausgebildet sind, und wobei die elastischen Einrichtungen (37, 38, 37', 38') der Klammer von einer Endseite (15) der Klammer (3) getragen werden, die sich gegenüber dem Boden (9) des Gehäuses befindet, und wobei die elastischen Einrichtungen (37, 38, 37', 38') flexible Zungen sind, die schräg bezüglich der Endseite (15) ausgerichtet sind, **dadurch gekennzeichnet, dass** sie ein Lager (2) enthält, das zwischen dem Boden (9) und der Klammer (3) angeordnet ist, und wobei die elastischen Einrichtungen einen Druck auf dieses Lager (2) ausüben, um anzustreben, die Klammer (3) aus dem Gehäuse (1) zu entfernen.

2. Vorrichtung nach Anspruch 1, bei der die Klammer Klauen (34, 34') zum Halt des Lagers (2) aufweist, wobei diese Klauen eine Translationsbewegung des Lagers (2) bezüglich der Klammer (3) erlauben.

3. Vorrichtung nach Anspruch 1, die mindestens vier Zapfen (23, 24) und mindestens vier flexible Lamellen (38, 37, 38', 37') aufweist.
